# FASCICULE DE BREVET EUROPEEN

(11) **EP 2 811 121 B1**
(45) Date de publication et mention de la délivrance du brevet: **31.07.2019**
(21) Numéro de dépôt: 13170209.4
(22) Date de dépôt: 03.06.2013
(51) Int. Cl.: F01D 25/24, F01D 9/04, F01D 25/00, F04D 29/02, F04D 19/02

(54) **Carter composite de compresseur de turbomachine axiale avec bride de fixation métallique**
Verbundgehäuse für einen Kompressor einer axialen Turbomaschine mit Metallbefestigungsflansch
Composite casing for axial turbomachine compressor with metal flange

(43) Date de publication de la demande: 10.12.2014
(73) Titulaire: Safran Aero Boosters SA, 4041 Herstal (BE)
(72) Inventeur: Derclaye, Alain, 4218 Couthuin (BE)
(74) Mandataire: Lecomte & Partners

(56) Documents cités:
- EP-A2- 0 513 958
- EP-A2- 1 657 405
- GB-A- 2 434 182
- US-A- 4 063 847
- US-A1- 2009 175 719

## Description

### Domaine technique

L'invention a trait à un carter de turbomachine axiale. Plus particulièrement, l'invention a trait à un carter annulaire de compresseur de turbomachine axiale réalisé en un matériau composite et supportant une rangée annulaire d'aubes.

### Technique antérieure

Dans l'optique de réduire la masse d'un turboréacteur d'aéronef, certains éléments sont réalisés en matériaux composites. En particuliers, un élément structurant comme un carter annulaire extérieur peut être réalisé en matériau composite. Un tel carter, en plus de supporter des rangées d'aubes statoriques, sert généralement de support de montage pour d'autres éléments structurant du turboréacteur. Il doit par conséquent présenter une résistance mécanique adéquate.

Lorsqu'il s'agit d'un carter de compresseur basse pression, le carter est en contact du bec de séparation. Or, ce dernier est soumis à des ingestions. Le carter doit donc présenter une certaine souplesse et une certaine résilience pour se déformer et supporter les impacts sans rompre.

Les aubes qui sont fixées sur le carter peuvent l'être par l'intermédiaire de plateformes plaquées contre la surface intérieure du carter. Les aubes étant soumises à des efforts liés à l'écoulement du flux, elles transmettent des efforts auquel le carter doit résister. En complément, le carter doit tolérer les efforts de serrage des moyens de fixation des aubes ainsi que les concentrations de contraintes qui en découlent. Il est à souligner que le carter est couramment en contact de plusieurs jeux de moyens de fixations qui engendrent également des concentrations de contraintes.

Le document EP 2 402 615 A1 divulgue un carter externe de compresseur de turbomachine axiale. Le carter comprend une paroi annulaire et deux brides radiales, l'une en amont et l'autre en aval. Le carter est réalisé en un matériau composite. Il supporte plusieurs rangées annulaires d'aubes statoriques. Chaque aube présente une plateforme externe qui est fixée à la paroi annulaire à l'aide de moyens de fixation.

Il est connu de fixer les brides radiales sur un bec de séparation et sur un carter intermédiaire de la turbomachine. Ces fixations peuvent s'effectuer à l'aide de boulons insérés dans des orifices ménagés dans les brides radiales. Ces orifices sont particulièrement sollicités lors du fonctionnement de la turbomachine, des arrachements peuvent se produire en raison des efforts mécaniques de serrage et/ou des vibrations.

Pour contrer ces arrachements, il est envisageable d'épaissir fortement les brides. Or, cette solution tend à alourdir le carter, ce qui va à l'encontre du gain de masse espéré via la solution composite. De plus, la résistance mécanique de cette solution reste limitée et les concentrations de contraintes subsistent.

Afin de renforcer la paroi, il est connu de réaliser un carter annulaire avec une paroi composite et des brides radiales métalliques.

Le document FR 2 282 537 A1 divulgue un compresseur avec un carter externe de turbomachine axiale. Le carter comprend des rangées annulaires d'aubes ainsi qu'une alternance d'entretoises annulaires et d'anneaux de retenue d'aubes. Les anneaux de retenue sont réalisés en métal, et sont emmanchés dans les entretoises annulaires. Celles-ci sont réalisées en métal léger pour faire face aux contraintes mécaniques. Le carter reçoit une paroi annulaire en composite qui entoure les anneaux de retenue et les entretoises annulaires. La mise en oeuvre de la paroi composite s'effectue sur un mandrin où sont emmanchés les anneaux et les entretoises. L'emploi du mandrin représente un coût important à la fois en termes d'outillage et en termes de main d'oeuvre. Le temps d'enroulement du filament continu sur le mandrin constitue un temps de fabrication dispendieux. Bien que ce carter comprenne du composite, il reste lourd en raison de ses éléments métalliques. De plus, le mode de fixation des aubes est complexe. Il repose sur une pluralité d'interfaces mécaniques nécessitant des ajustements onéreux.

Le document US 2009/0175719 A1 divulgue un carter conforme au préambule de la revendication 1.

### Résumé de l'invention

### Problème technique

L'invention a pour objectif de résoudre au moins un des problèmes techniques soulevés par l'art antérieur. Plus précisément, l'invention a pour objectif de réduire le coût de réalisation d'un carter composite. L'invention a également pour objectif de réduire les contraintes mécaniques dans la paroi annulaire en composite d'un carter de turbomachine.

### Solution technique

L'invention a pour objet un carter de turbomachine axiale, notamment de compresseur, selon la revendication 1.

On entend par bride annulaire rapportée sur la paroi annulaire une bride annulaire fixée sur la paroi annulaire, par exemple à l'aide de moyens de fixation.

Suivant un mode avantageux de l'invention, la section radiale de la bride annulaire présente un profil en forme de « L », le profil comportant une portion s'étendant axialement et une portion s'étendant radialement, préférentiellement la portion s'étendant axialement est majoritairement disposée radialement du côté de la surface intérieure de la paroi annulaire, et la portion s'étendant radialement est majoritairement disposée radialement du côté de la surface extérieure de la paroi annulaire.

Suivant un mode avantageux de l'invention, la portion de la bride s'étendant axialement comprend un bord délimitant la zone annulaire de réception des plateformes des aubes.

Suivant un mode avantageux de l'invention, la paroi annulaire comprend une zone annulaire de réception d'un matériau abradable, la zone de réception des plateformes étant délimitée, d'un côté, par ladite zone de réception d'un matériau abradable et, de l'autre côté, par le bord de la portion de bride s'étendant axialement.

Suivant un mode avantageux de l'invention, la zone de réception des plateformes des aubes forme une cavité annulaire, préférentiellement la section radiale de la cavité annulaire est essentiellement rectangulaire et configurée pour permettre une insertion radiale des plateformes des aubes.

Suivant un mode avantageux de l'invention, la paroi annulaire et la bride annulaire sont réalisées en des matériaux différents, préférentiellement la bride annulaire est réalisée en un matériau métallique.

Suivant un mode avantageux de l'invention, la paroi annulaire composite comporte une matrice organique et une préforme comprenant des fibres, préférentiellement la matrice est répartie de manière homogène sur la paroi annulaire.

Suivant un mode avantageux de l'invention, la paroi annulaire comprend des premiers moyens de fixation, la bride annulaire comprend des deuxièmes moyens de fixation et les aubes comprennent des troisièmes moyens de fixation, les premiers moyens de fixation coopèrent avec les deuxièmes moyens de fixation, et/ou les troisièmes moyens de fixation coopèrent à la fois avec les premiers moyens de fixation et les deuxièmes moyens de fixation.

Suivant un mode avantageux de l'invention, les troisièmes moyens de fixation s'étendent radialement et traversent la paroi annulaire et la bride annulaire, préférentiellement les troisièmes moyens de fixation comprennent des moyens de serrage, éventuellement réversibles.

Suivant un mode avantageux de l'invention, le contour de chaque plateforme présente des bords longitudinaux et des bords transversaux, au moins un desdits bords étant en contact de la bride annulaire, la bride assurant ainsi un blocage en rotation des plateformes.

Suivant un mode avantageux de l'invention, les plateformes et la bride annulaire comprennent chacune une surface de guidage destinée à guider un flux dans la turbomachine, les surfaces de guidage des plateformes affleurant la surface de guidage de la bride annulaire.

Suivant un mode avantageux de l'invention, la bride annulaire comprend une partie qui épouse une surface, préférentiellement intérieure, de la paroi annulaire, ladite partie s'étendant axialement sur la majorité de la zone de réception des plateformes des aubes.

Suivant un mode avantageux de l'invention, la bride annulaire comporte des cavités radiales destinées à recevoir les plateformes des aubes, préférentiellement les cavités radiales sont configurées pour être majoritairement ouvertes vers les corps des aubes.

Suivant un mode avantageux de l'invention, le carter comprend une rangée annulaire d'aubes avec des plateformes qui présentent chacune une zone centrale formant généralement un disque, et deux zones de moindre épaisseur disposées axialement de part et d'autre de la zone centrale, la zone centrale étant majoritairement en appui radial contre la bride annulaire et au moins une des zone de moindre épaisseur étant majoritairement en butée axiale contre la bride annulaire.

Suivant un mode avantageux de l'invention, les moyens de fixation peuvent comprendre des axes, préférentiellement filetés, et peuvent comprendre des moyens de serrage.

Suivant un mode avantageux de l'invention, les moyens de fixation sont des moyens de fixation réversibles.

La section radiale de la bride annulaire est une section réalisée suivant un plan comprenant un axe radial et l'axe de rotation de la turbomachine.

Suivant un mode avantageux de l'invention, le compresseur est un compresseur basse pression.

Suivant un mode avantageux de l'invention, le carter est un carter externe apte à guider un flux axial.

Suivant un mode avantageux de l'invention, le carter comprend deux demi-coquilles séparées selon un plan longitudinal.

Par plan longitudinal, on entend un plan passant par l'axe de rotation de la turbomachine.

Suivant un mode avantageux de l'invention, le carter comprend plusieurs rangées annulaires d'aubes, préférentiellement au moins trois.

Suivant un mode avantageux de l'invention, le carter est un carter de compresseur comprenant plusieurs rangées annulaires d'aubes rotoriques, le carter entourant la majorité des rangées d'aubes rotoriques.

Suivant un mode avantageux de l'invention, la paroi annulaire comprend un profil de révolution courbe, préférentiellement le profil de révolution est coudé vers l'extérieur.

Suivant un mode avantageux de l'invention, la paroi annulaire est réalisée selon un procédé d'injection de résine par transfert dans un moule dans lequel est renfermé une préforme.

Suivant un mode avantageux de l'invention, les moyens de fixation de la paroi annulaire comprennent des orifices.

Suivant un mode avantageux de l'invention, les premiers moyens de fixation comprennent un premier jeu de moyens de fixation disposés annulairement et chevauchés axialement par la bride annulaire, ainsi qu'un deuxième jeu de moyens de fixation disposés annulairement et chevauchés axialement par les plateformes, l'espacement axial entre le premier jeu et le deuxième jeu étant inférieur à la longueur axiale des plateformes.

Suivant un mode avantageux de l'invention, la paroi est majoritairement non métallique.

Suivant un mode avantageux de l'invention, la paroi est majoritairement, préférentiellement uniquement constituée d'une matrice et de fibres.

La majorité de la paroi est la majorité massique ou la majorité volumique.

Suivant un mode avantageux de l'invention, la densité de la paroi est inférieure à 4,00 ; préférentiellement inférieure à 2,50 ; plus préférentiellement inférieure à 1,00.

Suivant un mode avantageux de l'invention, la bride annulaire est réalisée en titane, en aluminium ou en acier.

Suivant un mode avantageux de l'invention, la bride annulaire s'étend radialement majoritairement dans un sens opposé aux aubes par rapport à la paroi annulaire.

Suivant un mode avantageux de l'invention, les orifices de fixation de la bride annulaire sont disposés dans les cavités radiales.

Suivant un mode avantageux de l'invention, la bride annulaire présente une portion de jonction entre la portion radiale et la portion axiale.

Suivant un mode avantageux de l'invention, la bride annulaire présente un prolongement axial s'étendant axialement depuis la portion de jonction jusqu'au niveau axial du plan d'appui de la portion radiale.

Suivant un mode avantageux de l'invention, le fond de chaque cavité radiale présente une partie centrale et deux parties latérales disposées latéralement dans la continuité de la partie centrale, les parties latérales étant inclinées par rapport à la partie centrale vers l'extérieur de la cavité correspondante.

Suivant un mode avantageux de l'invention, les cavités radiales sont distantes les unes des autres suivant une direction circonférentielle.

Suivant un mode avantageux de l'invention, la portion radiale présente des moyens de montage tels des orifices de fixation qui s'étendent généralement axialement.

Suivant un mode avantageux de l'invention, la portion radiale présente une surface d'appui perpendiculaire à l'axe de rotation de la turbomachine.

Suivant un mode avantageux de l'invention, la portion de jonction présente un profil rectiligne et est incliné par rapport à la portion radiale et par rapport à la portion axiale, ou le profil de la portion de jonction forme une marche, préférentiellement la portion de jonction en forme de marche présente une portée cylindrique apte à assurer à emmanchement arbre alésage.

Suivant un mode avantageux de l'invention, la préforme comporte un empilement de feuilles de fibres de carbone et/ou de feuilles de fibres de verre, éventuellement le nombre de feuilles reste égal sur toute la surface de la préforme.

Suivant un mode avantageux de l'invention, les fibres mesurent plus de 3,00 cm, préférentiellement plus de 6,00 cm, encore plus préférentiellement plus de 12,00 cm.

Suivant un mode avantageux de l'invention, les aubes sont disposées dans des segments de redresseur présentant des plateformes communes.

L'invention a également trait à un carter de turbomachine axiale comprenant un carter, remarquable en ce que le carter est conforme à l'invention, préférentiellement le carter est un carter annulaire externe et comprend une bride annulaire amont et une bride annulaire aval.

### Avantages apportés

L'invention entraine une réduction du coût de réalisation du carter composite avec une bride métallique. Elle propose une architecture de carter composite modulable puisqu'elle autorise une fabrication isolée des différents éléments. Cette technologie simplifie en outre d'éventuelles réparations.

L'invention permet de réduire les contraintes mécaniques dans la paroi annulaire du carter. En effet, l'invention permet de répartir une partie des efforts sur les surfaces des plateformes des aubes, la répartition étant directe ou indirecte. L'invention propose de rajouter une interface entre les plateformes d'aube et la bride, ce qui constitue une voie de transmission d'effort qui contourne localement le bord de la paroi annulaire.

L'invention emploie une bride annulaire avec un matériau différent de celui de la paroi annulaire. Le matériau des plateformes des aubes est également différent de celui de la bride annulaire. Ces particularités offrent une liberté de choix de matériaux présentant des résistances mécaniques différentes et des compacités différentes. Ainsi, il est possible d'alléger certaines parties tandis que d'autres sont renforcées. Le compromis masse résistance mécanique peut être résolu indépendamment à différentes interfaces.

L'invention permet de réduire le nombre de feuilles de la préforme composite grâce à la diminution des contraintes mécaniques. Une conséquence est que la préforme est plus simple à réaliser puisque la difficulté de mise en oeuvre des feuilles tend à augmenter pour chaque feuille supplémentaire. Cette difficulté est amplifiée par les surfaces incurvées que présente couramment un carter. Une économie est réalisée sur les coûts de matière et de main d'oeuvre liés à la préforme.

### Brève description des dessins

La figure 1 représente une turbomachine axiale selon l'invention.
La figure 2 est un schéma d'un compresseur de turbomachine selon l'invention.
La figure 3 illustre une coupe axiale d'une portion de carter suivant un premier mode de réalisation de l'invention.
La figure 4 schématise une coupe axiale d'une portion de carter suivant un deuxième mode de réalisation de l'invention.
La figure 5 illustre une vue depuis l'intérieur d'une bride annulaire selon le deuxième mode de réalisation de l'invention.
La figure 6 ébauche une plateforme d'aube selon le deuxième mode de réalisation de l'invention.

### Description des modes de réalisation

Dans la description qui va suivre, les termes intérieur ou interne et extérieur ou externe renvoient à un positionnement par rapport à l'axe de rotation d'une turbomachine axiale.

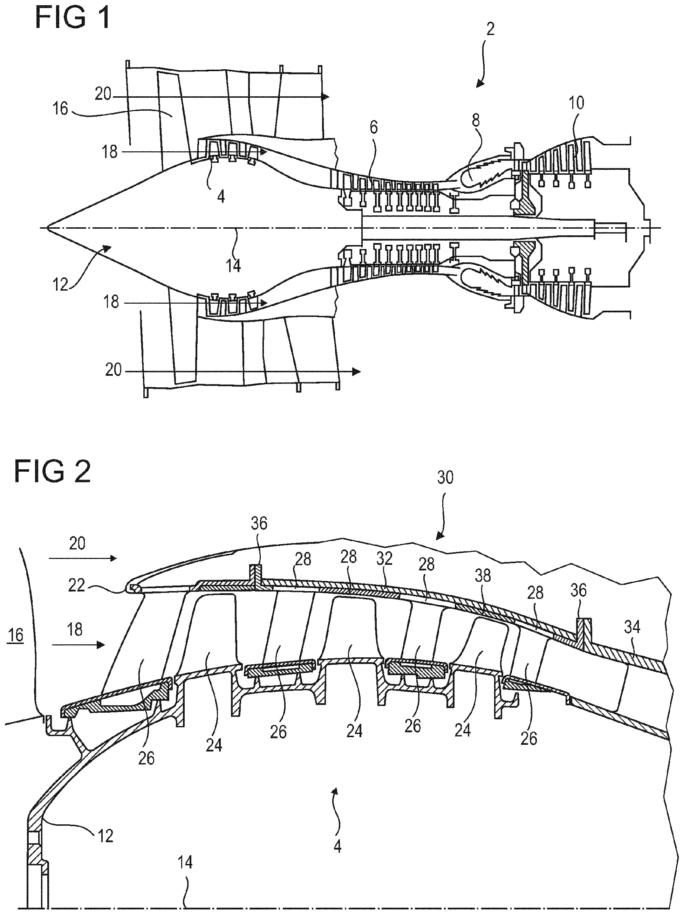

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 4 et 6. Des moyens de démultiplication peuvent augmenter la vitesse de rotation transmise aux compresseurs. Ou encore, les différents étages de turbines peuvent chacun être reliés aux étages de compresseur via des arbres concentriques. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 10.

Un ventilateur d'entrée communément désigné fan 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Les flux primaire 18 et secondaire 20 sont des flux annulaires, ils sont canalisés par le carter de la turbomachine. A cet effet, le carter présente des parois cylindriques ou viroles qui peuvent être internes ou externes.

La figure 2 est une vue en coupe d'un compresseur d'une turbomachine axiale. Le compresseur peut être un compresseur basse-pression 4 tel que celui de la figure 1. On peut y observer une partie du fan 16 et le bec de séparation 22 du flux primaire 18 et du flux secondaire 20. Le rotor 12 comprend plusieurs rangées d'aubes rotoriques 24, en l'occurrence trois.

Le compresseur 4 comprend plusieurs redresseurs, en l'occurrence quatre, qui contiennent chacun une rangée d'aubes statoriques 26. Les redresseurs sont associés au fan 16 ou à une rangée d'aubes rotoriques pour redresser le flux d'air, de sorte à convertir la vitesse du flux en pression.

Les aubes statoriques 26 s'étendent essentiellement radialement. Elles sont régulièrement espacées les unes des autres, et présentent une même orientation angulaire dans le flux. Avantageusement, les aubes 26 d'une même rangée sont identiques. Eventuellement, l'espacement entre les aubes peut varier localement tout comme leur orientation angulaire. Certaines aubes peuvent être différentes du reste des aubes de leur rangée.

Les aubes statoriques 26 présentent chacune un corps également appelé pale, s'étendant radialement en traversant la veine du flux primaire 18. Chaque aube présente également au moins une plateforme, éventuellement deux plateformes à savoir une plateforme externe 28 et une plateforme interne. Les plateformes délimitent radialement le flux primaire. Elles comprennent des surfaces de guidage aptes à guider ledit flux.

Le compresseur présente un carter annulaire externe 30. Le carter 30 enveloppe le compresseur. Il présente à cet effet une paroi annulaire 32 entourant la majorité des aubes rotoriques 24. La paroi annulaire 32 peut être formée de deux demi-coquilles formant chacune une moitié d'un tube découpé axialement. La paroi annulaire 32 présente une forme de tonneau ou d'ogive. Sa surface intérieure est concave. Sa variation de rayon est continue pour pouvoir compresser progressivement le flux.

Le carter externe 30 est fixé en amont au bec de séparation 22, et est reçu par le carter intermédiaire 34 de la turbomachine en aval. Le carter intermédiaire 34 comprend une paroi annulaire interne et une paroi annulaire externe entre lesquelles s'étend radialement une rangée annulaire d'aubes ou de bras de carter. Le carter est essentiellement, préférentiellement uniquement relié au bec de séparation 22 et au carter intermédiaire. Le bec de séparation 22 peut uniquement être fixé sur le carter externe 30 de sorte à être son support unique.

Le carter extérieur 30 comprend également une bride annulaire radiale, préférentiellement deux brides annulaires 36. Le carter extérieur 30 est fixé au bec de séparation 22 et au carter intermédiaire 34 par l'intermédiaire de ses brides annulaires 36. Le carter extérieur 30 comprend une bride annulaire amont et une bride annulaire aval. Chacune d'elle peut former un demi-cercle. Préférentiellement, chaque demi-cercle coïncide avec une demi-coquille du carter extérieur 30.

Le carter extérieur 30 comprend également des couches annulaires de matériau abradable 38. Ces couches d'abradable 38 sont disposées axialement au droit des aubes rotoriques 24. Elles s'étendent axialement entre les plateformes externes 28 des aubes statoriques 26.

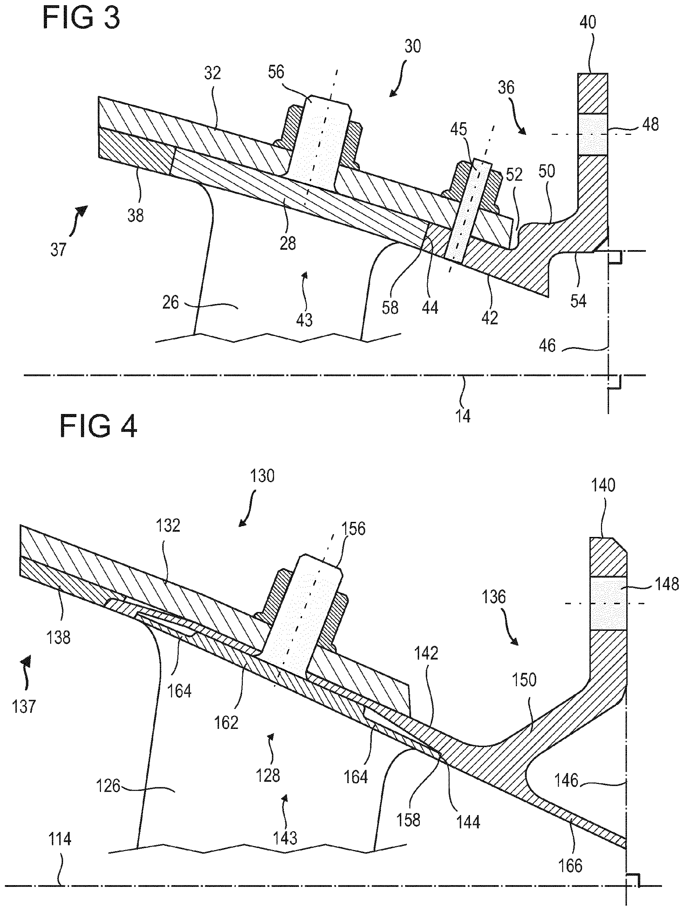

La figure 3 est une vue en coupe d'un carter extérieur 30 de compresseur d'une turbomachine axiale 2 tel que celle de la figure 1. L'enseignement de l'invention pourrait également être appliqué à un carter de turbine, de chambre de combustion ou encore à un carter intermédiaire. Le carter peut être un carter extérieur ou un carter intérieur qui délimite l'extérieur, respectivement l'intérieur d'un flux annulaire. Le carter représenté montre une des aubes statoriques 26 et une portion de la bride annulaire 36.

La paroi annulaire 32 comprend des premiers moyens de fixation. Les premiers moyens de fixation peuvent comprendre des orifices traversants qui forment au moins une rangée annulaire. Les premiers moyens de fixation peuvent comprendre un premier jeu de moyens de fixation disposés annulairement et un deuxième jeu de moyens de fixation disposés annulairement. Le premier jeu est chevauché axialement par la bride annulaire, le deuxième jeu étant chevauché axialement par la plateforme. Les premiers moyens de fixation peuvent comprendre d'autres jeux de moyens de fixation qui sont chevauchés et coopèrent avec une autre bride annulaire radiale et/ou avec d'autres rangées annulaires d'aubes.

La paroi annulaire 32 est en matériau composite. Le matériau composite peut comprendre une matrice organique. La matrice peut être réalisée à partir d'une résine organique injectée dans un moule puis qui polymérise. Le procédé d'injection peut être un procédé de transfert, connu sous l'acronyme RTM (Resin Transfert Molding en anglais). Préférentiellement la résine est thermodurcissable. Elle peut être une résine époxy.

Le matériau composite comprend une préforme. Cette dernière peut être formée d'un empilement de plis ou feuilles de fibres. Les feuilles peuvent être des feuilles avec des fibres de verre et/ou des feuilles avec des fibres de carbone. Les fibres sont des fibres longues. Les fibres peuvent être des fibres ordonnées et/ou des fibres agencées de manière aléatoire. Les fibres être tissées. Elles peuvent être pré-imprégnées d'une résine. La préforme comprend un empilement de 5 à 40 feuilles, préférentiellement de 8 à 20 feuilles, plus préférentiellement de 10 à 15 feuilles. Le nombre de couches formées par les feuilles peut varier localement de sorte à renforcer localement le carter, par exemple au niveau des zones de fixation.

La bride annulaire 36 est réalisée en un matériau différent de la paroi annulaire 32. Elle peut être réalisée en un matériau métallique. Elle peut être réalisée en titane, en aluminium ou en acier. La bride annulaire peut être réalisée en un matériau composite, par exemple à matrice céramique et/ou avec des fibres métalliques. Les matrices et les fibres présentées précédemment peuvent également être employées.

La bride annulaire 36 présente généralement un profil en « L ». Le profil présente une portion radiale 40 et une portion axiale 42. Le profil présente généralement une épaisseur constante, son épaisseur varie de moins de 20% par rapport à son épaisseur moyenne. La portion axiale 42 peut être inclinée par rapport à l'axe de rotation de la turbomachine. La portion axiale 42 présente une surface d'appui épousant la surface intérieure de l'extrémité de la paroi annulaire 32.

La surface intérieure de la paroi annulaire 32 comprend une zone annulaire de réception 43 des plateformes de aubes 26. La zone annulaire de réception 43 peut avoir un profil radial rectangulaire, ou sensiblement en forme de trapèze de sorte à permettre l'insertion des plateformes depuis l'intérieur. La bride annulaire 36 peut délimiter directement la zone annulaire de réception 43. Préférentiellement, il s'agit de la portion axiale 42 qui délimite la zone annulaire de réception 43. A cet effet, elle présente un bord 44 annulaire amont qui délimite la zone de réception 43. La paroi annulaire 32 comprend une zone annulaire de réception d'un matériau abradable 37. La zone de réception des plateformes 43 peut être délimitée par la zone annulaire de réception d'un matériau abradable 37. Elle peut également l'être par le bord 44 de la portion de bride s'étendant axialement 42. Avantageusement la couche annulaire d'abradable 38 est logée dans la zone annulaire de réception d'un matériau abradable 37.

La bride annulaire 36 est fixée à l'extrémité de la paroi annulaire 32 via sa portion axiale 42. Cette dernière présente à cet effet des deuxièmes moyens de fixation 45 qui coopèrent avec des premiers moyens de fixation de la paroi. Les deuxièmes moyens de fixation 45 peuvent être des axes s'étendant généralement radialement, préférentiellement de manière orthogonale à l'interface entre la paroi annulaire 32 et la portion axiale 42. Les axes peuvent être des lockbolts ou des vis. Ils sont montés sur la bride annulaire une fois qu'elle est plaquée contre la paroi annulaire.

La portion radiale 40 du profil de la bride annulaire 36 génère par rotation autour de l'axe de rotation 14 un plan perpendiculaire 46 à ce même axe. Des moyens de montage 48 peuvent être placés sur la portion radiale 40. Les moyens de montage 48 peuvent être des orifices destinés à recevoir des vis de fixation qui coopèrent avec le carter intermédiaire. Les deuxièmes moyens 45 de fixation peuvent être moins espacés les uns des autres que les moyens de montage 48.

Le profil de la bride annulaire comprend de manière optionnelle une portion de jonction 50 entre la portion axiale 42 et la portion radiale 40. La portion de jonction 50 peut présenter une forme de marche. La forme de marche peut ménager un jeu axial 52 au niveau de l'extrémité axiale de la paroi annulaire 32. Le jeu 52 peut être nul de sorte à assurer un appui. Préférentiellement la forme de marche fait saillie vers l'extérieur. La surface intérieure de la zone de jonction 50 peut générer par rotation une surface cylindrique 54. Cette surface cylindrique 54 peut former un emmanchement arbre alésage avec le bec de séparation, le carter intermédiaire, ou avec tout autre élément auquel la bride annulaire 36 est fixée.

L'aube 26 comporte des troisièmes moyens de fixation 56 pour la monter sur la paroi annulaire 32. Les troisièmes moyens de fixation 56 coopèrent avec les premiers moyens de fixation de la paroi annulaire. Les troisièmes moyens de fixation 56 s'étendent radialement depuis la plateforme 28 dans une direction opposée à la pale de l'aube 26. Les troisèmes moyens de fixation 56 peuvent traverser la paroi annulaire 32. La plateforme 28 épouse généralement la surface intérieure de la paroi annulaire. La plateforme présente une surface d'appui qui est généralement plaquée contre la paroi annulaire, éventuellement seul le contour de la surface d'appui est en contact de la paroi annulaire.

La plateforme 28 est en contact de la portion axiale 42 de la bride annulaire. Elles butent axialement l'une contre l'autre. Puisque la paroi annulaire est inclinée à cet endroit, la plateforme et la portion axiale de la bride annulaire permettent également une transmission d'effort orienté radialement. La bride annulaire et la paroi annulaire sont en contact au niveau de la partie axiale 42. Cette zone de contact est étendue et permet également une transmission d'efforts axiaux et radiaux.

La jonction 58 entre la portion axiale 42 et la plateforme 28 est lisse. A cet endroit, les épaisseurs de la portion axiale et de la bride annulaire sont égales de sorte à ne pas perturber les écoulements. Pour éviter qu'il y ait chevauchement, le profil de l'interface s'étend perpendiculairement à la surface de la paroi annulaire. Les deux éléments sont en contact sur toute leur épaisseur pour favoriser la transmission des efforts.

La figure 4 représente un carter 130 selon un deuxième mode de réalisation de l'invention. Cette figure 4 reprend la numérotation des figures précédentes pour les éléments identiques ou similaires, la numération étant toutefois incrémentée de 100. Des numéros spécifiques sont utilisés pour les éléments spécifiques à ce mode de réalisation.

La portion de jonction 150 présente un profil rectiligne. Le profil de la portion de jonction est incliné par rapport aux profils de la portion axiale et de la portion radiale. La longueur de la portion axiale 142 est supérieur à la longueur de la plateforme 128. La portion axiale dépasse la plateforme en amont et en aval.

La bride annulaire 136 présente une cavité radiale 160 dans laquelle est introduite la plateforme 128 de l'aube 126. La cavité radiale 160 peut être ménagée sur la surface intérieure de la portion axiale lorsque cette dernière est placée à l'intérieur de la paroi annulaire. Suivant une autre configuration, la cavité radiale 160 peut être ménagée sur la surface extérieure si la portion axiale est placée à l'extérieur de la paroi annulaire. L'aube 126 est montée sur la bride annulaire 136 en insérant sa plateforme 128 dans la cavité radiale 160 depuis l'intérieur.

La plateforme 128 présente une zone centrale 162 épousant le fond de la cavité radiale 160. Elle présente également des zones de moindre épaisseur 164 disposées axialement de part et d'autre la zone centrale 162. Les zones de moindre épaisseur 164 peuvent être en retrait du fond de la cavité radiale 160.

Dans cette configuration, les troisièmes moyens de fixation 156 de l'aube, les deuxièmes moyens de fixation de la bride annulaire, et les premiers moyens de fixation de la paroi annulaire coïncident. Les troisièmes moyens de fixation 156 coopèrent à la fois avec les premiers moyens de fixation et les deuxièmes moyens de fixation. Les orifices formés dans la bride annulaire et les orifices formés aux extrémités de la paroi annulaire sont mis en correspondance. L'axe de fixation 156 de l'aube traverse l'orifice de fixation de la paroi annulaire ainsi que l'orifice de fixation de la bride annulaire. Cette solution permet de simplifier l'assemblage du carter 130 puisque les troisièmes moyens de fixation des aubes sont utilisés à la fois pour fixer la bride annulaire et la paroi annulaire. Ceci permet d'alléger le carter. Une économie de moyens de fixation est réalisée. L'assemblage du carter est accéléré.

La bride annulaire 136 présente également un prolongement axial 166. Le prolongement axial 166 s'étend depuis la portion de jonction 150 dans un sens opposé à la portion axiale 142. Le prolongement axial peut s'étendre juqu'au droit de la surface aval de la portion radiale 140. Il peut servir de buté axiale.

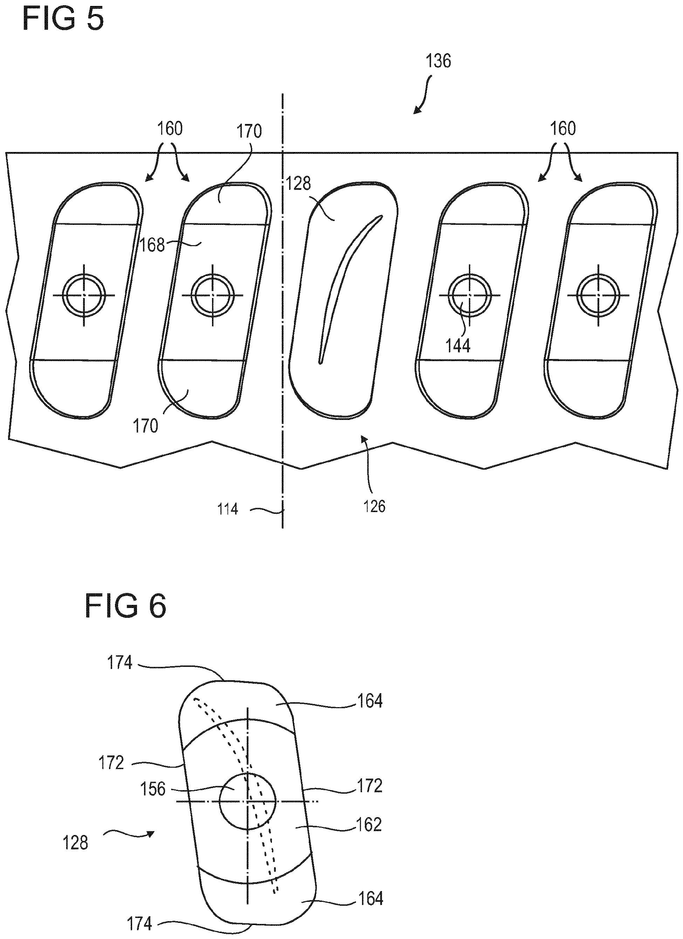

La figure 5 représente la surface de guidage de la bride annulaire selon le deuxième mode de réalisation de l'invention.

La bride annulaire 136 montre une pluralité de cavités radiales 160. Les cavités radiales sont disposées annulairement. Elles sont réparties sur la surface interne de la bride annulaire 136. Les cavités radiales 160 sont identiques. Elle présentent chacune un deuxième moyen de fixation. Une plateforme 128 d'aube 126 est représentée introduite dans une cavité radiale.

Chaque cavité radiale 160 reçoit une plateforme d'aube 128. La longueur de la cavité radiale est ajustée à la longueur de la plateforme de sorte à caler axialement la plateforme dans le carter.

Le fond de chaque cavité radiale 160 présente une partie centrale 168 et deux parties latérales 170 disposées axialement dans le prolongement de la partie centrale 168. Ces parties sont planes. Chaque partie latérale est inclinée par rapport à la partie centrale vers l'extérieur de la cavité correspondante.

La figure 6 représente une plateforme 128 d'aube 126 selon le deuxième mode de réalisation de l'invention. Eventuellement, ce modèle de plateforme peut être employé dans d'autres modes de réalisation de l'invention.

La plateforme 128 présente une forme généralement rectangulaire. Elle présente deux côté longitudinaux 172 opposés et disposés selon l'axe de rotation de la turbomachine, ainsi que deux côtés transversaux 174 opposés qui sont agencés perpendiculairement à l'axe de rotation de la turbomachine.

La partie centrale 162 de la plateforme présente une forme générale de disque. Le disque peut être tronqué, éventuellement des deux côtés longitudinaux 172. Les troisièmes moyens de fixation 156 sont avantageusement centrés sur la partie centrale 162. Réaliser une plateforme avec une surface d'appui réduite permet de réduire la surface de frottement entre la plateforme et la bride annulaire. Cela facilite le positionnement angulaire de l'aube. Aussi, les zones de moindre épaisseur 164 permettent d'alléger l'aube.

## Revendications

1. Carter (30 ; 130) de turbomachine (2) axiale, notamment de compresseur (4 ; 6), comprenant :
- une rangée annulaire d'aubes s'étendant radialement et munies chacune d'une plateforme (28 ;128) respective ;
- une paroi annulaire (32 ; 132) en matériau composite et dont la surface intérieure comprend une zone annulaire (43 ; 143) de réception des plateformes (28 ; 128) de la rangée d'aubes (26 ; 126),
- au moins une bride annulaire de fixation (36 ; 136) s'étendant radialement et comprenant une portion axiale (42 ; 142),
**caractérisé en ce que**
la bride annulaire (36 ; 136) est rapportée sur la paroi annulaire (32 ; 132) et délimite la zone de réception (43 ; 143) des plateformes (28 ; 128) des aubes par un contact axial entre la portion axiale (42 ; 142) de la bride annulaire (36 ; 136) et les plateformes (28 ; 128).

2. Carter (30; 130) selon la revendication 1, **caractérisé en ce que** la section radiale de la bride annulaire (36 ; 136) présente un profil en forme de « L », le profil comportant une portion (42 ; 142) s'étendant axialement et une portion (40 ; 140) s'étendant radialement, préférentiellement la portion s'étendant axialement (42 ; 142) est majoritairement disposée radialement du côté de la surface intérieure de la paroi annulaire, et la portion s'étendant radialement (40 ; 140) est majoritairement disposée radialement du côté de la surface extérieure de la paroi annulaire.

3. Carter (30) selon la revendication 2, **caractérisé en ce que** la portion de la bride (36) s'étendant axialement (42) comprend un bord (44 ; 144) délimitant la zone annulaire de réception (43 ; 143) des plateformes des aubes.

4. Carter (30) selon la revendication 3, **caractérisé en ce que** la paroi annulaire (32) comprend une zone annulaire de réception d'un matériau abradable (37 ; 137), la zone de réception des plateformes (43 ; 143) étant délimitée, d'un côté, par ladite zone de réception d'un matériau abradable (37 ; 137) et, de l'autre côté, par le bord (44 ; 144) de la portion de bride s'étendant axialement (42).

5. Carter (30) selon l'une des revendications 1 à 4, **caractérisé en ce que** la zone de réception des plateformes (28) des aubes (26) forme une cavité annulaire, préférentiellement la section radiale de la cavité annulaire est essentiellement rectangulaire et configurée pour permettre une insertion radiale des plateformes (28) des aubes (26).

6. Carter selon l'une des revendications 1 à 5, **caractérisé en ce que** la paroi annulaire (32 ; 132) et la bride annulaire (36 ; 136) sont réalisés en des matériaux différents, préférentiellement la bride annulaire (36; 136) est réalisée en un matériau métallique.

7. Carter (30 ; 130) selon l'une des revendications 1 à 6, **caractérisé en ce que** la paroi annulaire (32 ; 132) composite comporte une matrice organique et une préforme comprenant des fibres, préférentiellement la matrice est répartie de manière homogène sur la paroi annulaire (32 ; 132).

8. Carter (30 ; 130) selon l'une des revendications 1 à 7, **caractérisé en ce que** la paroi annulaire (32 ; 132) comprend des premiers moyens de fixation, la bride annulaire (36 ; 136) comprend des deuxièmes moyens de fixation (45) et les aubes (26 ; 126) comprennent des troisièmes moyens de fixation (56 ; 156), les premiers moyens de fixation coopèrent avec les deuxièmes moyens de fixation, et/ou les troisièmes moyens de fixation (56 ; 156) coopèrent à la fois avec les premiers moyens de fixation et les deuxièmes moyens de fixation.

9. Carter (130) selon la revendication 8, **caractérisé en ce que** les troisièmes moyens de fixation (156) s'étendent radialement et traversent la paroi annulaire et la bride annulaire, préférentiellement les troisièmes moyens de fixation (156) comprennent des moyens de serrage, éventuellement réversibles.

10. Carter (30 ; 130) selon l'une des revendications 1 à 9, **caractérisé en ce que** le contour de chaque plateforme (28; 128) présente des bords longitudinaux (172) et des bords transversaux (174), au moins un desdits bords étant en contact de la bride annulaire (36 ; 136), la bride assurant ainsi un blocage en rotation des plateformes.

11. Carter (30 ; 130) selon l'une des revendications 1 à 10, **caractérisé en ce que** les plateformes (28; 128) et la bride annulaire (36; 136) comprennent chacune une surface de guidage destinée à guider un flux (18; 20) dans la turbomachine (2), les surfaces de guidage des plateformes affleurant la surface de guidage de la bride annulaire (36 ; 136).

12. Carter (130) selon l'une des revendications 1 à 11, **caractérisé en ce que** la bride annulaire (136) comprend une partie qui épouse une surface, préférentiellement intérieure, de la paroi annulaire (132), ladite partie s'étendant axialement sur la majorité de la zone de réception des plateformes (128) des aubes (126).

13. Carter (130) selon l'une des revendications 1 à 12, **caractérisé en ce que** la bride annulaire (136) comporte des cavités radiales (160) destinées à recevoir les plateformes (128) des aubes (126), préférentiellement les cavités radiales (160) sont configurées pour être majoritairement ouvertes vers les corps des aubes (126).

14. Carter (130) selon l'une des revendications 1 à 13, **caractérisé en ce que** les plateformes (128) présentent chacune une zone centrale (162) formant généralement un disque, et deux zones de moindre épaisseur (164) disposées axialement de part et d'autre de la zone centrale (162), la zone centrale (162) étant majoritairement en appui radial contre la bride annulaire (136) et au moins une des zone de moindre épaisseur étant majoritairement en butée axiale contre la bride annulaire (136).

15. Carter de turbomachine (2) axiale comprenant un carter (30 ; 130), **caractérisé en ce que** le carter (30 ; 130) est conforme à l'une des revendications 1 à 14, préférentiellement le carter est un carter annulaire externe et comprend une bride annulaire (36 ; 136) amont et une bride annulaire aval (36 ; 136).

## Patentansprüche

1. Gehäuse (30; 130) einer axialen Turbomaschine, insbesondere eines Kompressors (4; 6), umfassend:
- eine ringförmige Reihe von Blättern, die sich radial erstrecken und jeweils eine entsprechende Plattform (28; 128) umfassen;
- eine ringförmige Wand (32; 132) aus Kompositmaterial dessen innere Oberfläche einen ringförmigen Bereich (43; 143) zum Aufnehmen der Plattformen (28; 128) der Reihe von Blättern (26; 126) umfasst,
- zumindest einen ringförmigen Befestigungsflansch (36; 136), der sich radial erstreckt und einen axialen Teil (42; 142) umfasst,
**gekennzeichnet dadurch, dass**
der ringförmige Flansch (36; 136) an der ringförmigen Wand (32; 132) befestigt ist und den aufnehmenden Bereich (43; 143) der Plattformen (28; 128) der Blätter durch einen axialen Kontakt zwischen dem axialen Teil (42; 142) des ringförmigen Flansches (36; 136) und den Plattformen (28; 128) begrenzt.

2. Gehäuse (30; 130) gemäß Anspruch 1, **gekennzeichnet dadurch, dass** der radiale Abschnitt des ringförmigen Flansches (36; 136) ein L-förmiges Profil hat, wobei das Profil einen sich axial erstreckenden Teil (42; 142) und einen sich radial erstreckenden Teil (40; 140) hat, wobei vorzugsweise der sich axial erstreckende Teil (42; 142) überwiegend radial auf der Seite der inneren Oberfläche der ringförmigen Wand angeordnet ist und der sich radial erstreckende Teil (40; 140) überwiegend radial auf der Seite der äußeren Oberfläche der ringförmigen Wand angeordnet ist.

3. Gehäuse (30) gemäß Anspruch 2, **gekennzeichnet dadurch, dass** der Teil (42) des Flansches (36), der sich axial erstreckt, einen Rand (44) umfasst, der den ringförmigen aufnehmenden Bereich (43; 143) der Blätterplattformen begrenzt.

4. Gehäuse (30) gemäß Anspruch 3, **gekennzeichnet dadurch, dass** die ringförmige Wand (32) einen ringförmigen aufnehmenden Bereich aus einem zerreibbaren Materials (37; 137) umfasst, wobei der aufnehmende Bereich der Plattformen (43; 143) auf einer Seite durch den besagten Bereich aus einem zerreibbaren Material (37; 137) und auf der anderen Seite durch den Rand (44; 144) des sich axial erstreckenden Teils (42) des Flansches begrenzt ist.

5. Gehäuse (30) gemäß einem der Ansprüche 1 bis 4, **gekennzeichnet dadurch, dass** der aufnehmende Bereich der Plattformen (28) der Blätter (26) eine ringförmige Ausnehmung ausbildet, wobei vorzugsweise der radiale Bereich der ringförmigen Ausnehmung im Wesentlichen rechteckig und dazu gestaltet ist, eine radiale Einführung der Plattformen (28) der Blätter (26) zu erlauben.

6. Gehäuse gemäß einem der Ansprüche 1 bis 5, **gekennzeichnet dadurch, dass** die ringförmige Wand (32; 132) und der ringförmige Flansch (36; 136) aus verschiedenen Materialien gemacht sind, wobei der ringförmige Flansch (36; 136) vorzugsweise aus einem metallischen Material gemacht ist.

7. Gehäuse (30; 130) gemäß einem der Ansprüche 1 bis 6, **gekennzeichnet dadurch, dass** die ringförmige Kompositwand (32; 132) eine organische Matrix und ein Formteil umfassend Fasern umfasst, wobei vorzugsweise die Matrix homogen auf der ringförmigen Wand (32; 132) verteilt ist.

8. Gehäuse (30; 130) gemäß einem der Ansprüche 1 bis 7, **gekennzeichnet dadurch, dass** die ringförmige Wand (32; 132) erste Befestigungsmittel umfasst, der ringförmige Flansch (36; 136) zweite Befestigungsmittel (45) umfasst und die Blätter (26; 126) dritte Befestigungsmittel (56; 156) umfassen, wobei die ersten Befestigungsmittel mit den zweiten Befestigungsmitteln wechselwirken und/oder die dritten Befestigungsmittel (56; 156) sowohl mit den ersten Befestigungsmitteln als auch mit den zweiten Befestigungsmitteln wechselwirken.

9. Gehäuse (130) gemäß Anspruch 8, **dadurch gekennzeichnet, dass** die dritten Befestigungsmittel (156) sich radial durch die ringförmige Wand und den ringförmigen Flansch erstrecken, wobei vorzugsweise die dritten Befestigungsmittel (156) Festspannmittel umfassen, möglicherweise reversibele.

10. Gehäuse (30; 130) gemäß einem der Ansprüche 1 bis 9, **gekennzeichnet dadurch, dass** die Kontur von jeder Plattform (28; 128) longitudinale Ränder (172) und transversale Ränder (174) hat, wobei zumindest eines der besagten Ränder in Kontakt mit dem ringförmigen Flansch (36; 136) ist, sodass der Flansch dadurch sicherstellt, dass die Plattformen gegenüber einer Drehung blockiert sind.

11. Gehäuse (30; 130) gemäß einem der Ansprüche 1 bis 10, **gekennzeichnet dadurch, dass** die Plattformen (28; 128) und der ringförmige Flansch (36; 136) jeweils eine Führungsoberfläche aufweisen, die dazu gestaltet ist, den Strom (18; 20) in der Turbomaschine (2) zu leiten, wobei die Führungsoberflächen der Plattformen bündig mit der Führungsoberfläche des ringförmigen Flansches (36; 136) liegen.

12. Gehäuse (130) gemäß einem der Ansprüche 1 bis 11, **gekennzeichnet dadurch, dass** der ringförmige Flansch (136) einen Teil umfasst, der einer Oberfläche, vorzugsweise einer inneren, der ringförmigen Wand (132) folgt, wobei sich der besagte Teil axial über mehr als die Hälfte des aufnehmenden Bereiches der Plattformen (128) der Blätter (126) erstreckt.

13. Gehäuse (130) gemäß einem der Ansprüche 1 bis 12, **gekennzeichnet dadurch, dass** der ringförmige Flansch (136) ringförmige Ausnehmungen (160) umfasst, die zur Aufnahme der Plattformen (128) der Blätter (126) gestaltet sind, wobei vorzugsweise die ringförmigen Ausnehmungen (160) dazu konfiguriert sind, zu den Körpern der Blätter (126) hin überwiegend offen zu sein.

14. Gehäuse (130) gemäß einem der Ansprüche 1 bis 13, **gekennzeichnet dadurch, dass** die Plattformen (128) jeweils einen im Wesentlichen eine Scheibe ausbildenden Zentralbereich (162) und zwei Bereiche mit verringerter Dicke (164) aufweisen, die axial auf beiden Seiten des Zentralbereiches (162) angeordnet sind, wobei der Zentralbereich (162) überwiegend in radialer Lagerung gegenüber dem ringförmigen Flansch (136) ist und zumindest einer der Bereiche mit reduzierter Dicke überwiegend in axialem Anschlag gegenüber dem radialen Flansch (136) ist.

15. Gehäuse einer axialen Turbomaschine (2) umfassend ein Gehäuse (30; 130), **gekennzeichnet dadurch, dass** das Gehäuse gemäß einem der Ansprüche 1 bis 14 ist, wobei das Gehäuse vorzugsweise ein externes ringförmiges Gehäuse ist und einen ringförmigen Flansch (36; 136) flussaufwärts und einen ringförmigen Flansch (36; 136) flussabwärts umfasst.

## Claims

1. Housing (30; 130) of an axial turbomachine (2), in particular of a compressor (4; 6), comprising:
- an annular row of blades extending radially and each comprising a respective platform (28; 128);
- an annular wall (32; 132) of composite material and whose inner surface comprises an annular area (43; 143) for receiving the platforms (28, 128) of the row of blades (26; 126),
- at least one annular flange (36; 136) extending radially and comprising an axial portion (42; 142),
**characterized in that**
the annular flange (36; 136) is attached to the annular wall (32; 132) and bounds the receiving area (43; 143) of the platforms (28; 128) of the blades through an axial contact between the axial portion (42; 142) of the annular flange (36; 136) and the platforms (28; 128).

2. Housing (30; 130) according to claim 1, **characterized in that** the radial section of the annular flange (36; 136) has an L-shaped profile, the profile having an axially extending part (42; 142) and a radially extending part (40; 140), the axially extending part (42; 142) being preferably located mainly radially on the side of the inner surface of the annular wall, and the radially extending part (40; 140) being located mainly radially on the side of the outer surface of the annular wall.

3. Housing (30) according to claim 2, **characterized in that** the part (42) of the flange (36) extending axially comprises an edge (44) bounding the receiving area (43; 143) of the blade platforms.

4. Housing (30) according to claim 3, **characterized in that** the annular wall (32) comprises an annular area for receiving an abradable material (37; 137), the receiving area of the platforms (43; 143) being bounded, on one side, by the said receiving area of an abradable material (37; 137) and, on the other side, by the edge (44; 144) of the axially extending part (42) of the flange.

5. Housing (30) according to claims 1 to 4, **characterized in that** the receiving area of the platforms (28) of the blades (26) forms an annular recess, the radial section of the annular recess preferably being substantially rectangular and designed to permit radial insertion of the platforms (28) of the blades (26).

6. Housing according to claims 1 to 5, **characterized in that** the annular wall (32; 132) and the annular flange (36; 136) are made of different materials, the annular flange (36; 136) being preferably made of a metallic material.

7. Housing according to claims 1 to 6, **characterized in that** the composite annular wall (32; 132) comprises an organic matrix and a preform comprising fibres, the matrix being preferably homogeneously distributed over the annular wall (32; 132).

8. Housing according to claims 1 to 7, **characterized in that** the annular wall (32, 132) comprises a first means of fixing, the annular flange (36; 136) includes a second means of fixing (45) and the blades (26; 126) comprise a third means of fixing (56; 156), the first means of fixing interacting with the second means of fixing, and/or the third means of fixing interacting with both the first means of fixing and the second means of fixing.

9. Housing (130) according to claim 8, **characterized in that** the third means of fixing (156) extend radially through the annular wall and the annular flange, the third means of fixing (156) preferably comprising clamping means, possibly reversible.

10. Housing (30; 130) according to claims 1 to 9, **characterized in that** the contour of each platform (28; 128) has longitudinal edges (172) and transverse edges (174), at least one of the said edges being in contact with the annular flange (36; 136), the flange thus ensuring that the platforms are locked against rotating.

11. Housing (30; 130) according to claims 1 to 10, **characterized in that** the platforms (28; 128) and the annular flange (36; 136) each comprise a guidance surface designed to guide the flow (18; 20) in a turbomachine (2), the guidance surfaces of the platforms lying flush with the guidance surface of the annular flange (36; 136).

12. Housing (130) according to claims 1 to 11, **characterized in that** the annular flange (136) comprises a part which follows a surface, preferably interior, of the annular wall (132), the said part extending axially over more than half of the receiving area of the platforms (128) of the blades (126).

13. Housing (130) according to claims 1 to 12, **characterized in that** the annular flange (136) includes radial recesses (160) designed for the reception of platforms (128) of the blades (126), the radial recesses (160) preferably being configured to be largely open towards the bodies of the blades (126).

14. Housing (130) according to claims 1 to 13, **characterized in that** the platforms (128) have each a generally disc-shaped central region (162), and two areas of reduced thickness (164) located axially on either side of the central region (162), the central region (162) predominantly bearing radially against the annular flange (136) and at least one of the areas of reduced thickness abutting predominantly axially against the annular flange (136).

15. Axial turbomachine (2) housing, comprising a housing (30, 130), **characterized in that** the housing (30, 130) is in accordance with one of claims 1 to 14, the housing preferably being an external annular housing and comprising an upstream annular flange (36, 136) and a downstream annular flange (36, 136).
